Europäisches Patentamt

European Patent Office

Office européen des brevets

(19)

(11) Numéro de publication: **0 248 139**
**A2**

(12) **DEMANDE DE BREVET EUROPEEN**

(21) Numéro de dépôt: **86810350.8**

(22) Date de dépôt: **12.08.86**

(51) Int. Cl.³: **G 01 N 23/22**
**H 01 J 37/00**

(30) Priorité: **04.06.86 CH 2275/86**

(43) Date de publication de la demande:
**09.12.87 Bulletin 87/50**

(84) Etats contractants désignés:
**AT BE DE FR GB IT LU NL SE**

(71) Demandeur: **ARTIKA INTERNATIONAL (HONG-KONG) LIMITED**
**1101, Dominion Centre 43, Queen's Road East**
**HONG-KONG(HK)**

(72) Inventeur: **Lecaille, Michel André**
**Les Glaieuls 17**
**F-33470 La Hume(FR)**

(74) Mandataire: **Ardin, Pierre**
**PIERRE ARDIN & CIE 22, rue du Mont-Blanc**
**CH-1211 Genève 1(CH)**

(54) **Procédé d'authentification d'objets anciens en métal.**

(57) Le procédé d'authentification d'objets anciens permet de détecter les falsifications en numismatique, les interventions modernes, les rajouts, le réemploi, la restauration en orfèverie antique et ancienne.

Ce procédé concerne l'examen morphologique dit de transfert (procédé par répliques plastiques) permettant :

a) l'examen morphologique d'objet difficilement transportables

b) une étude ultra fine par microscopie électronique par transmission, avec possibilité d'analyse X et diffraction des particules extraites

c) une identification extrèment précise de l'objet, par stokage d'un faciès microscpique difficilement modifiable ou reproductibel, véritable micro-carte d'identité.

0248139

- 2 -

## PROCEDE D'AUTHENTIFICATION
## D'OBJETS ANCIENS EN METAL

Les objets d'art anciens sont souvent contrefaits et les imitations sont parfois si bonnes qu'il est très difficile de les déceler.

L'invention se rapporte à un procédé d'authentification d'objets anciens en métal, notamment en métal précieux, caractérisé en qu'on examine au moins une portion de l'objet à l'aide d'un microscope électronique à balayage pour détecter dans sa structure les traces de son élaboration et/ou de son façonnage et/ou de son vieillissement et en ce qu'on compare le résultat de cet examen avec au moins celui d'un examen analogue effectué sur un objet similaire d'origine archéologique certaine.

Les objets d'art ou pièces de monnaie sont parfois tout à fait sûrs au point de vue archéologique. C'est notamment le cas lorsque ces objets sont trouvés ou contrôlés par des scientifiques spécialisés. Ces objets sont ensuite envoyés dans des musées ou associations équivalentes et il n'existe pratiquement pas de risque de fraude. Il en est pratiquement de même lorsque les objets ou pièces sont issus de collections connues, cataloguées et suivies. Par contre, les objets ou pièces peuvent aussi provenir de fouilles sauvages, héritages ou autres sans être catalogués et il est important de pouvoir déterminer avec sûreté s'il s'agit d'objets anciens authentiques ou non.

Pour permettre l'authentification d'objets anciens ou présumés anciens, sans avoir recours aux moyens compliqués et coûteux dont disposent ou dont peuvent disposer les musées, le procédé selon l'invention est axé sur l'étude des faciès métallurgiques, la compréhension de leurs origines, leur compilation dans le sens d'une cohérence physique et historique. Les critères servant de base à la méthode ont été choisis par ceux les moins sujets à la subjectivité de l'observateur, les moins accessibles à une tentative de falsification de part la puissance de l'appareillage employé et dont la conjonction aboutit à une conclusion solide.

Tout métal ou alliage antique ou ancien façonné conserve dans sa morphologie et sa structure les traces de son élaboration, de son façonnage, de son vieillissement, en résumé, les traces marquant les différentes étapes de son existence. Toute intervention postérieure se traduira donc par une incohérence qui permet de détecter une imitation.

Pour permettre d'effectuer un examen sérieux de la structure de l'objet, il faut disposer d'un microscope électronique à balayage, ce type d'appareil étant capable de distinguer des détails séparés seulement de 1/1000 de micron. Grâce à cet appareil, on peut analyser les faciès, comprendre leur origine et les compiler statistiquement et ensuite vérifier les résultats de la méthode sur des objets sûrs au point de vue archéologique, autres que ceux faisant l'objet de l'examen. Ensuite, il est utile de se livrer, avec l'aide d'experts, à une vérification "en aveugle" sur un échantillonnage d'objets authentiques et faux, parfaitement connus de ces experts, et s'assurer ainsi de la fiabilité des critères et schémas retenus.

Parmi les différentes particularités que l'on peut observer dans la structure des objets, il faut citer dans la morphologie du métal de base la porosité, les soufflures d'élaboration du flan (pour une pièce), les dendrites de solidification (soudure ou moulage).

En ce qui concerne le façonnage, on pourra observer les traces dues à la frappe, le martelage, le tréfilage ou lissage, la fusion, l'adhérence de moulage, les manques, les rajouts, le travail à l'outil (manuel ou mécanique).

Les caractères relatifs au vieillissement sont par exemple l'usure des façonnages, les lèvres d'inclusions, les rayures, la dégradation du métal par oxydation, le transfert ou la diffusion des éléments d'alliages et leur dissolution différentielle. A ce sujet, il y a lieu de relever que l'or a une réputation d'inaltérabilité mais que cette notion est dépassée. Il existe en fait des oxydes d'or, qui sont connus des métallurgistes spécialisés dans la physique des hautes pressions et hautes températures, comme cela a été mentionné au Congrès du MAS à Bethleem, USA, en 1984.

Bien entendu, on peut effectuer encore d'autres examens, notamment des analyses métallurgiques qui donnent la composition de l'alliage de base, des hétérogénéités (diffusions, oxydations, etc.) et permettent de mettre en évidence les sauçages, la rénovation par électrolyse (réargenture), le vieillissement artificiel, la composition des résidus et des gangues (naturelles ou artificielles).

Ce procédé permet de reconnaître une dégradation artificielle moderne d'une transformation, d'un vieillissement de long terme par oxydation différentielle, diffusion au sein de la matrice de certains éléments vers les joints de grains, affinité de certains métaux dits nobles à stocker dans leur agression une altération naturelle et chonologiquement sure (oxydes composés carbonés).

En faisant une série d'examens d'objets dont l'origine est certaine, il est possible d'établir une chronologie logique des caractères relatifs aux traces de leur élaboration, de leur façonnage et de leur vieillissement. Si un objet à authentifier ne répond pas à cette chronologie logique, on peut en déduire qu'il s'agit très vraisemblablement d'un objet contrefait.

- 1 -

## REVENDICATIONS

1.      Procédé d'authentification d'objets anciens en métal, notamment en métal précieux, **caractérisé** en ce qu'on examine au moins une portion de l'objet à l'aide d'un microscope électronique à balayage pour détecter dans sa structure les traces de son élaboration et/ou de son façonnage et/ou de son vieillissement et en ce qu'on compare le résultat de cet examen avec au moins celui d'un examen **analogue effectué** sur un objet similaire d'origine archéologique certaine.

2.      Procédé selon la **revendication 1, caractérisé** en ce qu'on vérifie le résultat dudit examen en procédant à une succession d'examens semblables effectués sur un échantillonnage connu d'objets authentiques et d'objets faux.

3.      Procédé selon la revendication 1 ou 2, **caractérisé** en ce qu'on fait porter ledit examen de l'objet sur la structure du métal de base pour reconnaître sa porosité, ses soufflures d'élaboration du flan et/ou les dendrites de solidification, ceci à l'échelle du um ou inférieur au um.

4.      Procédé selon la revendication 1 ou 2, **caractérisé** en ce que l'examen concernant le façonnage porte sur les traces résultant de la frappe, du martelage, du tréfilage ou lissage et des opérations de travail à l'outil.

5.      Procédé selon la revendication 1 ou 2, **caractérisé** en ce que l'examen des traces de vieillissement porte notamment, sur le mode de façonnage et son usure et sur la dégradation du métal dans le temps afin de reconnaître une dégradation artificielle moderne d'une transformation, d'un vieillissement de long terme par oxydation différentielle, diffusion au sein de la matrice de certains éléments vers les joints de grains, affinité de certains métaux dits nobles à stocker dans leur agression une altération naturelle et chronologiquement sure (oxydes composés carbonés).

- 1bis -

6. Procédé selon l'une des revendications précédentes, caractérisé en ce qu'on procède à une série d'examens d'objets dont l'origine est certaine et en ce qu'on établit une chronologie logique des caractères relatifs aux traces de son élaboration, de son façonnage et de son vieillissement.